# EUROPEAN PATENT APPLICATION

(11) **EP 3 141 169 A1**
(43) Date of publication of application: **15.03.2017**
(21) Application number: 15887856.1
(22) Date of filing: 26.06.2015
(51) Int. Cl.: A47J 43/046, A47J 43/07

(54) **MIXER**

(30) Priority: 30.03.2015 KR 20150043902; 08.05.2015 KR 20150064425
(71) Applicant: Jworld Tech, Ansan-si, Gyeonggi-do 425-836 (KR)
(72) Inventor: MAENG, Myung Ho, Ansan-si Gyeonggi-do 425-836 (KR)
(74) Representative: Schmelcher, Thilo
(86) International application number: PCT/KR2015/006555
(87) International publication number: WO 2016/159446

(57) **Abstract**

The present invention relates to a blender, and more particularly, to a blender, which makes a vacuum state in a container when foods contained and cooked in containers having various sizes are cooked to prevent food ingredients from being oxidized, more protect nutrients when the food ingredients are cooked, make a color of the food look better, and obtain the cooked foods which are rich and soft.

The blender according to the present invention includes: a main body in which a rotary motor is built; a container detachably installed on the main body and including a blade operating by being interlocked with the rotary motor; a container lid including an exhaust nozzle part in which a through hole is defined to communicate with the inside of the container, the container lid covering the container; a stand extending upward from one side of the main body; a connection body installed on the stand and including a connection nozzle part air-tightly connected to the exhaust nozzle part; and a vacuum pump connected to the connection nozzle part, wherein the connection body is movable upward and downward.

## Description

### TECHNICAL FIELD

The present invention relates to a blender, and more particularly, to a blender, which maintains a vacuum state in a container when foods contained and cooked in containers having various sizes are processed or stored to prevent food ingredients from being oxidized, more protect nutrients when the food ingredients are cooked, make a color of the food look better, and obtain the cooked foods which are rich and soft.

### BACKGROUND ART

The present application claims the priority under Korean Patent Application Nos. 10-2015-0043902, filed on March 30, 2015 and 10-2015-0064425, filed on May 08, 2015, the entire contents disclosed in the specification and drawings of that applications are incorporated in this application.

In the modern society in which the importance of the well-being is gradually emerging, interests of cooking various fresh food ingredients are increasingly growing for better health. Particularly, interests of lifestyle in which fresh vegetables and fruits are grinded to make and eat juice, soup, and the like are increasing regardless of various consumer classes.

Generally, blenders represent devices having functions of grinding and pulverizing ingredients or expressing juice so as to process and conveniently ingest fruits and vegetables. An example of such a blender is well described in Korean Patent Publication No. 10-2013-0010560 that is a prior art document.

However, the conventional blenders may have several problems.

In case of the conventional blenders, a probability of destruction of nutrients is high when ingredients are processed. Since air (oxygen) in a container and pulverized portions of the food ingredients contact each other to cause oxidation reaction while the ingredients are pulverized by using a blade, the unique properties of the ingredients may be changed, or the nutrients may be destroyed.

Also, the conventional blenders may pulverize ingredients such as fruits and vegetables by rotating a blade. Here, the air and the pulverized ingredients may be mixed with each other to generate resistance. When the ingredients are pulverized, a processing time may increase by the resistance to reduce processing efficiency. In addition, a contact time between the ingredients and the air may increase to destroy more nutrients.

Also, only one predetermined container may be available for cooking, and containers having different sizes may not be mounted, and thus the conventional blenders may be deteriorated in utilization.

### DISCLOSURE OF THE INVENTION

### TECHNICAL TASK

Accordingly, the present invention is invented for solving the above-described problems, and the technical task of the present invention is to provide a blender capable of preventing foods contained and cooked in a container having various sizes from being oxidized, more protecting nutrients, making a color of the food look better, obtaining cooked foods which are rich and soft, and reducing a cooking time.

### TECHNICAL SOLUTION

The blender according to the present invention includes: a main body in which a rotary motor is built; a container detachably installed on the main body and including a blade operating by being interlocked with the rotary motor; a container lid including an exhaust nozzle part in which a through hole is defined to communicate with the inside of the container, the container lid covering the container; a stand extending upward from one side of the main body; a connection body installed on the stand and including a connection nozzle part air-tightly connected to the exhaust nozzle part; and a vacuum pump connected to the connection nozzle part, wherein the connection body is movable upward and downward.

### ADVANTAGEOUS EFFECTS

The blender according to the present invention includes the main body, the container including the blade, the container lid including the exhaust nozzle part in which the through hole communicating with the inside of the container is defined and covering the container, the stand extending upward from the one side of the main body, the connection body installed on the stand and including the connection nozzle part air-tightly contacted to the exhaust nozzle part, and the vacuum pump connected to the connection nozzle part, making the vacuum state within the container, and the connection body is movable upward and downward. Therefore, the blender may prevent foods contained and cooked in the container having various sizes from being oxidized, more protect the nutrients, make a color of the food look better, obtain cooked foods which are rich and soft, and reduce the cooking time.

### BRIEF DESCRIPTION OF THE DRAWINGS

FIG. 1 is a perspective view of a blender according to an embodiment of the present invention.
FIG. 2 is a side view of the blender according to an embodiment of the present invention.
FIG. 3 is an exploded perspective view illustrating a portion of an inner structure of the blender according to an embodiment of the present invention.
FIG. 4 is a cross-sectional view of the blender according to an embodiment of the present invention.
FIG. 5 is a cross-sectional view illustrating a state in which the blender operates according to a height of the container according to an embodiment of the present invention.
FIG. 6 is a view of containers having various sizes, which are usable in the blender according to an embodiment of the present invention.

### MODE FOR CARRYING OUT THE INVENTION

Hereinafter, a preferred embodiment of the present invention will be described in detail with reference to the accompanying drawings. However, the present invention is not limited or restricted to the embodiment below.

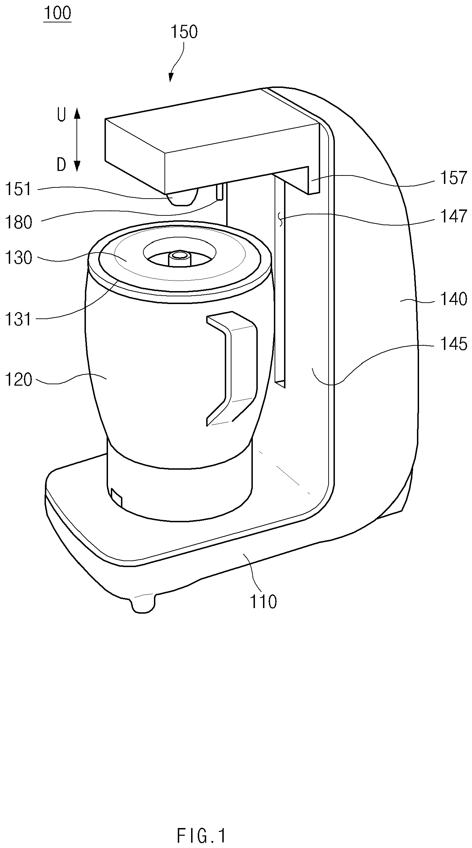

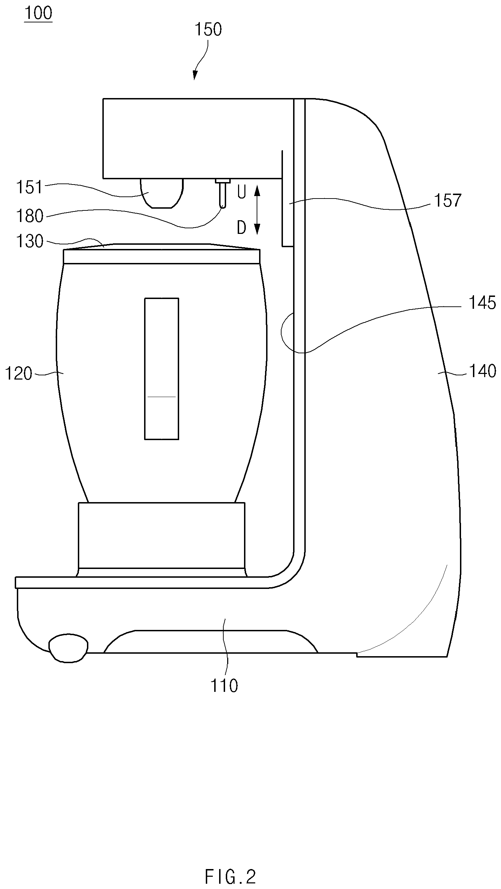

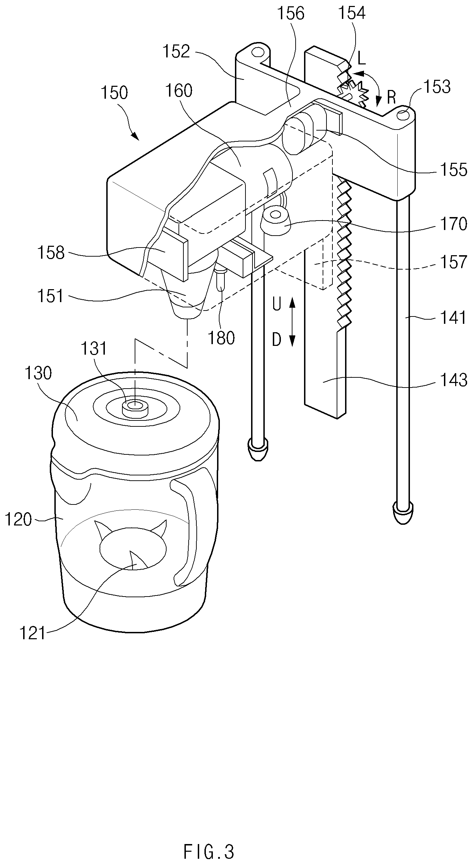

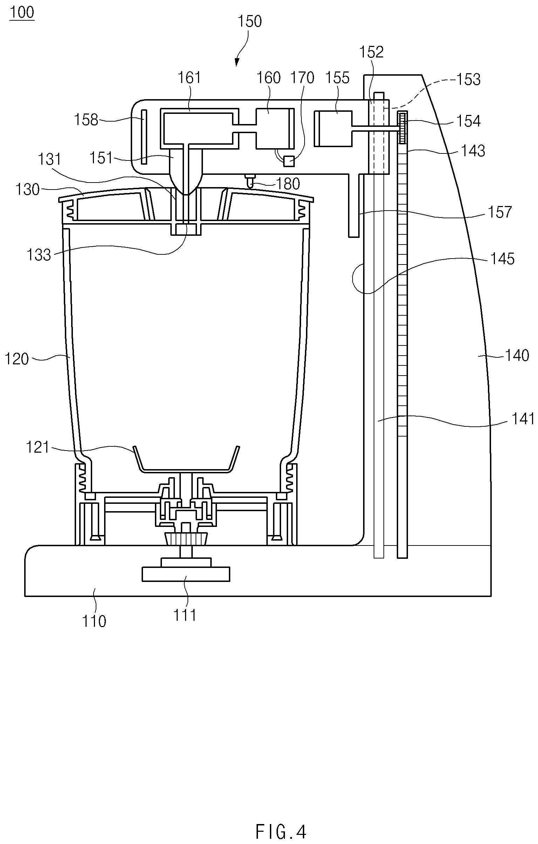

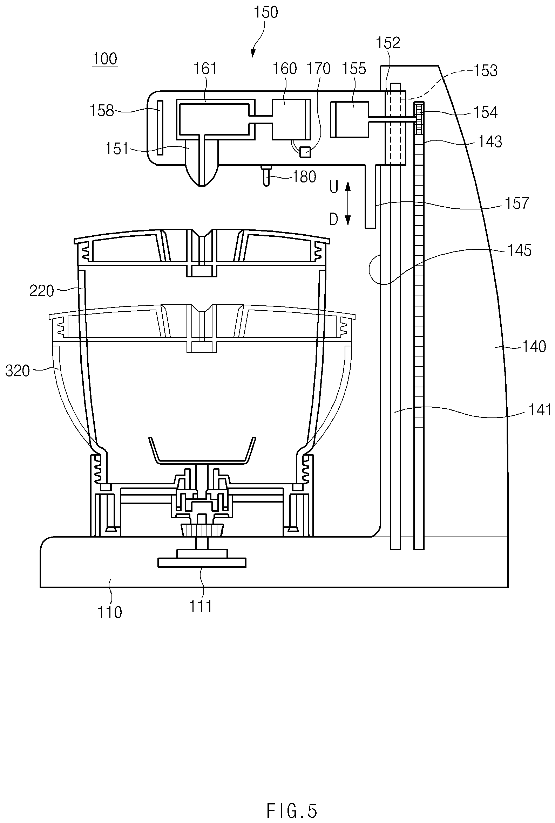

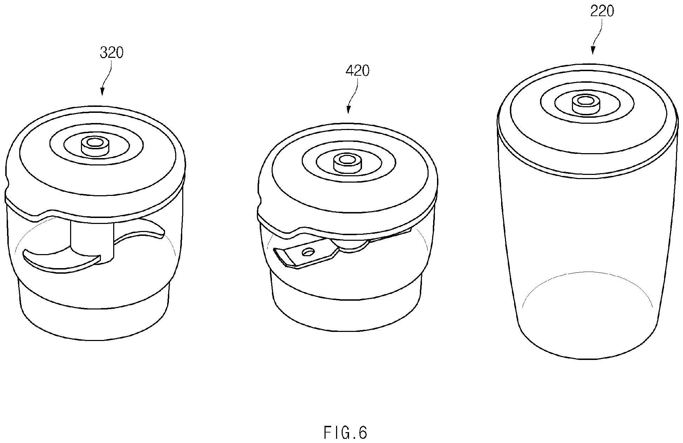

FIG. 1 is a perspective view of a blender according to an embodiment of the present invention. FIG. 2 is a side view of the blender according to an embodiment of the present invention. FIG. 3 is an exploded perspective view illustrating a portion of an inner structure of the blender according to an embodiment of the present invention. FIG. 4 is a cross-sectional view of the blender according to an embodiment of the present invention. FIG. 5 is a cross-sectional view illustrating a state in which the blender operates according to a height of the container according to an embodiment of the present invention. FIG. 6 is a view of containers having various sizes, which are usable in the blender according to an embodiment of the present invention. Hereinafter, a blender according to an embodiment of the present invention will be described with reference to FIGS. 1 to 6.

Referring to FIGS. 1 to 4, a blender 100 according to an embodiment of the present invention includes a main body 110, a container 120, a container lid 130, a stand 140, a connection body 150, and a vacuum pump 160, and the connection body 150 is elevatably movable upward and downward.

First, the main body 110 may be disposed at a lower portion of the blender 100 to form a base. A rotary motor 111 for rotating a blade 121 of the container 120, which will be described below, may be built in the main body 110.

The container 120 may contain foods to be cooked and detachably installed on the main body 110. The blade 121 to operate by being interlocked with the rotary motor 111 disposed in the main body 110 may be provided in the container 120. The blade 121 may cut, finely pulverize, or stir (mix) foods such as vegetables and fruits while rotating.

The container lid 130 may be a kind of covers that cover the container 120. Also, the container lid 130 may include an exhaust nozzle part 131 in which a through hole 133 is defined to communicate with the inside of the container 120. Also, a packing unit such as a rubber packing may be provided at an edge portion of the container lid 130, which is coupled to the container 120.

The packing unit may a unit for blocking an air flow. Thus, when the container lid 130 covers the container 120, the inside of the container 120 may be sealed from the outside of the container 120, and only the through hole 133 may serve as a passage through which the inside and outside of the container communicate with each other.

The connection body 150 may be disposed above the container 120 to move downward D toward the container 120 or move upward U in a direction that is away from the container 120. The stand 140 extending upward may be provided on one side of the main body 110, and the connection body 150 may move upward U and downward D in a state in which the connection body 150 is installed at the stand 140.

The connection body 150 may include a connection nozzle part 151 which is air-tightly connected to the exhaust nozzle part 131 of the container 120. The connection nozzle part 151 may be separated from the exhaust nozzle part 131 when the main body 150 moves upward U. On the other hand, the connection nozzle part 151 may be connected to the exhaust nozzle part 131 when the connection body 150 moves downward D. Here, when at least a portion of the connection nozzle part 151 or the exhaust nozzle part 131 is formed of a polymer material such as rubber, the air tightness may more increase.

The detail constitutions for realizing the vertical movement of the connection body 150 will be described below.

Referring to FIGS. 3 and 4, the stand 140 includes a pillar member 141, and the connection body 150 may include a pillar holding part 152 coupled to the pillar member 141.

The pillar member 141 may have a shape extending upward from one side of the main body 110. The pillar member 141 may be fixed to the main body 110 to vertically stand up. Particularly, the pillar member 141 may be formed of a metal member having high strength.

An insertion hole 153 is defined in the pillar holding part 152, and the pillar holding part 152 may be coupled to the pillar member 141 in a manner in which the pillar member 141 is inserted into the insertion hole 153. The pillar holding part 152 may vertically move along the pillar member 141 in the state in which the pillar member 141 is inserted into the insertion hole 153. The pillar holding part 152 may be guided by the pillar member 141 to vertically move through the above-described manner in the state in which the pillar holder member is coupled to the pillar member 141.

Also, when the pillar holding part 152 vertically moves, the connection body 150, which moves together with the pillar holding part 152, may also vertically move.

In the blender 100 according to an embodiment of the present invention, the connection body 150 may vertically move by an electric operation. For this, in the blender 100 according to an embodiment of the present invention, the stand 140 may include a rack gear member 143, and the connection body 150 may include a pinion gear member 154 and a driving motor 155.

Particularly, the stand 140 may include the rack gear member 143 extending upward from the main body 110. The rack gear member 143 may be installed parallel to the pillar member 141. Also, the rack gear member 143 may have a surface having the form of a rack gear.

The connection body 150 may include a pinion gear member 154 gear-coupled to the rack gear member 143 and the driving motor 155 connected to the pinion gear member 154 to rotate the pinion gear member 154. Also here, the driving motor 155 may be fixedly installed on the connection body 150.

The pinion gear member 154 may rotate in one direction or the other direction in the state where the pinion gear member 154 is gear-coupled to the rack gear member 143, and rotation power may be received from the driving motor 155.

When the pinion gear member 154 rotates in one direction R by an operation of an electric switch, the pinion gear member 154 moves downward D, and the driving motor 155 connected to the pinion gear member 154 also moves downward D. Here, since the driving motor 155 is fixedly installed on the connection body 150, the connection body 150 may also move downward D when the driving motor 155 moves downward D. In this manner, the connection body 150 may move downward D by electric energy.

A manner in which the connection body 150 moves upward U is similar to the manner in which the connection body 150 moves downward D.

When the pinion gear member 154 rotates in the other direction L by the operation of the electric switch, the pinion gear member 154 moves upward U, and the driving motor 155 connected to the pinion gear member 154 also moves upward. Since the driving motor 155 is fixedly installed on the connection body 150, the connection body 150 may also move upward U when the driving motor 155 moves upward U. In this manner, the connection body 150 may move upward U by the electric energy.

For reference, the pillar member 141, the pillar holding part 152, the rack gear member 143, the pinion gear member 154, which are illustrated in FIGS. 3 and 4 are not illustrated in FIGS. 1 and 2 because the pillar member 141, the pillar holding part 152, the rack gear member 143, the pinion gear member 154 are installed in the stand 140 and not appear outside.

Also, a neck part 156 (see FIG. 3) of the connection body 150 is slidably coupled to a guide hole 147 (see FIG. 1) of the stand 140, and the neck part 156 may be guided by the guide hole 147 to vertically move.

Also, referring to FIGS. 1 to 4, the connection body 150 may be provided with a support member 157 having a surface parallel to an inner surface 145 of the stand 140. The support member 157 may slidably move upward and downward while adjacently facing the inner surface 145 of the stand 140. The support member 157 may play a role of supporting the connection body 150 through the inner surface 145 of the stand 140 to prevent the connection body 150 from being shaken or tilted.

Meanwhile, the blender 100 according to an embodiment of the present invention may include a vacuum pump 160 in the main body 150. The vacuum pump 160 may be connected to the connection nozzle part 151 of the connection body 150 through a connection part 161. Thus, an inner space of the container 120, the connection part 161, and an inner space of the vacuum pump 160 may define one communicating space.

When the vacuum pump 160 operates, the vacuum pump 160 may suction air in the container 120 via the connection part 161. Thus, the inside of the container 120 may be in a state in which a pressure is below a predetermined pressure or in a vacuum state. Particularly, when the vacuum pump 160 is disposed in the connection body 150, since a distance between the vacuum pump 160 and the container 120 is significantly reduced, vacuum efficiency may be improved.

The blender 100 according to an embodiment of the present invention may include a vacuum sensor 170 measuring a vacuum level inside the container 120. The vacuum pump 160 may operate in association with the vacuum sensor 170 to optimally maintain or control the vacuum level inside the container 120.

Also, the blender 100 according to an embodiment of the present invention may further include a vacuum display lamp (not shown) for confirming a proper vacuum state in the container 120 to realize more convenient control.

To set the vacuum level in the container 120 to a predetermined vacuum level, the display lamp may be turned on only when the vacuum level in the container 120 reaches the predetermined set value.

The blender 100 according to an embodiment of the present invention may perform operations of cutting, stirring (mixing), and pulverizing foods after making the inside of the container 120 to the vacuum state by using the above-described constituents.

As described above, when the foods are cooked by the blender after making the inside of the container 120 to the predetermined vacuum state, the blender may prevent oxidation of the cooked foods, more protect nutrients, make a color of the food look better, and obtain the cooked foods which are rich and soft.

Also, a resistance generation factor due to air may be reduced to reduce a cooking time. If the cooking time increases, the oxidation of the cooked foods may be more intensified.

Hereinafter, an operation process of the blender 100 according to an embodiment of the present invention will be described with reference to FIGS. 4 and 5.

First, foods (vegetables or fruits, etc.) to be cooked may be put into the container 120. Then, the container lid 130 may be covered.

Referring to FIG. 5, the connection body 150 may move upward U and downward D while being maintained in a horizontal state. A user may operate the electric switch to move the connection body 150 downward, thereby allowing the connection nozzle part 151 to be air-tightly contacted to the exhaust nozzle part 131 of the container 120.

In the state in which the connection body 150 moves downward so that the connection nozzle part 151 is connected to the exhaust nozzle part 131, a stop switch 180 may stop the movement of the connection body 150.

The stop switch 180 may be disposed on a bottom surface of the connection body 150. When the connection nozzle part 151 is connected to the exhaust nozzle part 131, the stop switch 180 may contact the top surface of the container lid 130 to operate.

Particularly, the stop switch 180 may operate to be pushed in a button type. Accordingly, when the stop switch 180 is pushed by the top surface of the container lid 130 while moving downward, the stop switch 180 may operate.

When the stop switch 180 operate, the connection body 150 may stop the downward movement D and be fixed on the spot. In this state, the connection nozzle part 151 may not be separated from the exhaust nozzle part 131 to maintain the air-tight connection therebetween. Force by which the connection nozzle part 151 is connected to the exhaust nozzle part 131 may be generated according to force by which the pinion gear member 154 rotates.

Thereafter, the inside of the container 120 is made to the vacuum state by operating the vacuum pump 160, and the cooking process of pulverizing or mixing the foods to be cooked may be performed by operating the rotary motor 111 which is built in the main body(110).

When the cooking is finished, the operations of the rotary motor 111 and the vacuum pump 160 may be stopped, and the connection nozzle part 151 may be separated from the exhaust nozzle part 131. As the connection body 150 moves upward U by the electric operation, the connection nozzle part 151 may be separated from the exhaust nozzle part 131.

Thereafter, the container 120 may be separated and removed form the main body 110.

The blender 100 according to an embodiment of the present invention may have specific effects because the connection nozzle part 151 is connected to and separated from the exhaust nozzle part 131 as the connection body 150 moves upward and downward.

Referring to FIG. 5, although the container 120 has sizes and heights which are variously changed, the blender 100 according to an embodiment of the present invention may perform the vacuum cooking to correspond to the changed size and height. That is, although a large container 220 and a small container 320 have heights different from each other, the connection body 150 may move each of the containers to match the heights so that the connection nozzle part 151 is connected to the exhaust nozzle part 131.

Thus, the cooking process using the blender 100 may be conveniently performed with respect to the containers having various sizes and heights as illustrated in FIG. 6.

Although the present invention is described by specific embodiments and drawings as described above, the present invention is not limited thereto and it is obvious that various changes and modifications may be made by those having ordinary skill in the art within the technical idea of the present invention and equivalent scope of the appended claims.

## Claims

1. A blender comprising:
a main body in which a rotary motor is built;
a container detachably installed on the main body and comprising a blade operating by being interlocked with the rotary motor;
a container lid comprising an exhaust nozzle part in which a through hole is defined to communicate with the inside of the container, the container lid covering the container;
a stand extending upward from one side of the main body;
a connection body installed on the stand and comprising a connection nozzle part air-tightly connected to the exhaust nozzle part; and
a vacuum pump connected to the connection nozzle part,
wherein the connection body is movable upward and downward.

2. The blender of claim 1, wherein the vacuum pump is installed in the connection body.

3. The blender of claim 1, further comprising a vacuum sensor configured to measure a vacuum level inside the container.

4. The blender of claim 1, wherein the stand comprises a pillar member extending upward from the main body,
wherein the connection body further comprises a pillar holding part coupled to the pillar member so that the connection body is guided by the pillar member to be movable upward and downward.

5. The blender of claim 4, wherein an insertion hole, in which the pillar member is inserted, is defined in the pillar holding part,
wherein, in the state in which the pillar member is inserted into the insertion hole, the pillar holding part moves upward and downward along the pillar member.

6. The blender of claim 1, wherein the stand comprises a rack gear member extending upward from the main body,
wherein, the connection body comprises a pinion gear member coupled to the rack gear member and a driving motor connected to the pinion gear member to rotate the pinion gear member,
wherein, the driving motor is fixedly installed on the connection body to move together with the connection body.

7. The blender of claim 1, further comprising a stop switch configured to stop the movement of the connection body in a state in which the connection body moves downward so that the connection nozzle part is connected to the exhaust nozzle part.

8. The blender of claim 7, wherein the stop switch is disposed on a bottom surface of the connection body to operate when contacting a top surface of the container lid.

9. The blender of claim 1, wherein the connection body further comprises a support member having a surface parallel to an inner surface of the stand,
wherein the support member slidably moves upward and downward while adjacently facing the inner surface of the stand.
